# EUROPÄISCHE PATENTSCHRIFT

(11) **EP 1 745 908 B1**
(45) Veröffentlichungstag und Bekanntmachung des Hinweises auf die Patenterteilung: **02.09.2009**
(21) Anmeldenummer: 06009821.7
(22) Anmeldetag: 12.05.2006
(51) Int. Cl.: B29C 33/52, B29C 70/48

(54) **Verfahren zur Herstellung von faserverstärkten Strukturhohlbauteilen mit einem wasserdispergierbaren Stützkern**
Method for producing fibre reinforced hollow objects with a water dispersible core
Procédé pour produire des objets creux renforcés par des fibres avec un noyau de moule dispersible dans l'eau

(30) Priorität: 29.06.2005 DE 102005030256
(43) Veröffentlichungstag der Anmeldung: 24.01.2007
(73) Patentinhaber: Bayerische Motoren Werke Aktiengesellschaft, 80809 München (DE)
(72) Erfinder: Niesner, Bruno, 84051 Essenbach (DE); Kerscher, Stefan, 85452 Moosinning (DE)

(56) Entgegenhaltungen:
- DE-A1- 19 534 836
- US-A- 5 262 100
- US-A- 5 492 660

## Beschreibung

Die Erfindung bezieht sich auf ein Verfahren zur Herstellung eines Strukturhohlbauteils aus faserverstärktem Kunststoff nach dem Oberbegriff des Anspruchs 1.

Zur Herstellung faserverstärkter Kunststoffhohlbauteile wird u.a. das sogenannte Resin Transfer Molding (RTM) - Verfahren und das Vakuum-Injektionsverfahren verwendet.

Dazu wird wenigstens eine Lage der z.B. uni- oder bidirektional gerichteten Verstärkungsfasern zwischen dem Ober- und dem Unterwerkzeug einer beheizten Presse gelegt und die Faserlage mit einem wärmehärtbaren Kunststoff, beispielsweise einem Epoxidharz mit Härter getränkt, der unter Druck in den Hohlraum mit der Faserlage zwischen Ober- und Unterwerkzeug injiziert wird. Ähnlich wird beim Vakuum-Injektionsverfahren vorgegangen, bei dem anstelle von Druck ein Vakuum angelegt wird, um den wärmehärtbaren Kunststoff in die Faserlage zu saugen.

Für Automobile werden zahlreiche Strukturhohlbauteile verwendet, beispielsweise die Stützsäulen, Schweller, Stoßfänger und dergleichen. Diese Hohlbauteile werden dabei meist geklebt. Die Klebestelle kann jedoch zu einem Versagen führen.

Zudem lässt die Maßhaltigkeit geklebter Hohlbauteile zu wünschen übrig.

Für die Herstellung von Hohlbauteilen im RTM-Verfahren werden üblicherweise heute Schmelzkerne aus Wachs eingesetzt. Die dafür eingesetzten Prozesse sind wegen der Größe der Kerne sehr aufwändig. Weiterhin bedingt der große Wärmeausdehnungskoeffizient des Wachses eine aufwändige Abstimmung der notwenigen Fertigungsmittel. Nach der eigentlichen Bauteilherstellung werden die Materialien wieder ausgeschmolzen. Dabei verbleibt auf der Werkzeuginnenwand ein Restmaterial, was zum einen das Bauteilgewicht erhöht sowie kritisch hinsichtlich Emissionen und Lackverträglichkeit bewertet wird.

Auch sind Stützkerne aus niedrigschmelzenden Wismutlegierungen verwendet worden. Wegen des hohen Energieaufwandes zum Schmelzen der Kerne, dem hohen Gewicht und der daraus resultierenden schwierigen Handhabbarkeit, aber auch wegen der Gesundheitsgefährdung durch Wismutdämpfe, sind diese Kerne in der Praxis jedoch nicht einsetzbar.

Ferner werden Stützkerne aus hochdichtem Schaumstoff eingesetzt, die im Bauteil verbleiben und damit zu einer entsprechenden Gewichtserhöhung führen.

Aus WO 02/072328 A1 ist bereits ein Stützkern nach dem Oberbegriff des Anspruchs 1 bekannt. Als wasserlösliches organisches Bindemittel wird dabei Polyvinylpyrrolidon verwendet und als Füllstoff insbesondere Keramikhohlkugeln mit einem Durchmesser von etwa 120 µm. Die Suspension aus Wasser, Bindemittel und Füllstoff wird wie beim Schlickerguss in eine poröse Form gefüllt, um das Wasser abfließen zu lassen. Der Stützkern wird dann entformt und bei 120 °C mehrere Stunden getrocknet. Mit dem bekannten Verfahren können zwar Einzelstücke stücke gefertigt werden, zur Herstellung großer Stückzahlen ist es jedoch ungeeignet.

Zum Umwickeln des Stützkerns kann eine Flechtanlage verwendet werden, wobei sich der Stützkern im Auge der Flechtanlage befindet, während die Verstärkungsfäden unter hoher Spannung von der Peripherie abgezogen werden. Wie sich gezeigt hat, hält der Stützkern nach WO 02/072328 A1 höheren Fadenabzugskräften aber nicht stand. Zudem hat sich gezeigt, dass sich mit dem bekannten Stützkern keine exakte Maßhaltigkeit erzielen lässt, insbesondere bei komplexen Strukturbauteilen. Auch wird durch die lange Trocknungszeit des Stützkerns die Herstellung des Strukturbauteils verzögert.

Aus US-A-5262100 geht ein wasserdispergierbarer Stützkern aus einem wasserlöslichen, organischen Bindemittel und einem Füllstoff hervor. Der Füllstoff besteht zu mehr als 50 Gew.-% aus Sand. Das organische Bindemittel ist ein Kohlehydrat, beispielsweise Stärke. In US-A-5492660 wird ein Verfahren nach dem Oberbegriff des Anspruchs 1 beschrieben. Dabei werden als Füllstoff für den Stützkern Glashohlkugeln verwendet, und als Bindemittel anorganische Bindemittel, wie Natriumsilikat, sowie Bindemittel auf Aluminiumoxidbasis, sodass der Stützkern nur mit starken Säuren, wie Salzsäure, dispergiert werden kann.

Aufgabe der Erfindung ist es, ein Verfahren
bereitzustellen, mit dem auch komplexe faserverstärkte Strukturhohlbauteile hoher Festigkeit und Maßhaltigkeit in kurzer Zeit herstellbar sind.

Dies wird erfindungsgemäß mit dem in Anspruch 1 gekennzeichneten Verfahren erreicht. In den übrigen Ansprüchen sind vorteilhafte Ausgestaltungen der Erfindung wiedergegeben.

Erfindungsgemäß wird ein Stützkern hoher Festigkeit verwendet. So beträgt die 3-Punkt-Festigkeit des Stützkerns, deren Messung nachstehend näher erläutert ist, vorzugsweise mehr als 500 N/cm², insbesondere mehr als 600 N/cm².

Zum Umwickeln des Stützkerns kann daher eine Flechtanlage verwendet werden, in deren Auge sich der Stützkern befindet, während die'Verstärkungsfäden unter hoher Spannung von der Peripherie abgezogen werden. Dank seiner hohen Festigkeit hält der Stützkern diesen hohen Abzugskräften ohne weiteres stand.

Zugleich wird mit dem erfindungsgemäßen Stützkern eine hohe Maßhaltigkeit der damit hergestellten Strukturhohlbauteile, insbesondere nach dem RTM-Verfahren erreicht, und zwar auch bei komplexen Bauteilen. Dies ist auf die hohe Druckfestigkeit des erfindungsgemäßen Stützkerns zurückzuführen. So beträgt bei einfachen Bauteilen der Injektionsdruck, dem der mit der Faserlage umwickelte Stützkern ausgesetzt ist, normalerweise 50 bar oder weniger, während bei komplexen Bauteilen mit einem entsprechend höheren Faservolumengehalt ein Injektionsdruck von 80 bar und mehr erforderlich ist, damit der wärmehärtbare Kunststoff die Faserlage auf dem Stützkern einwandfrei durchtränkt. Schon die geringste Kompression des Stützkerns beim RTM-Verfahren führt jedoch zu einem Strukturhohlbauteil von nicht mehr genau definierter Wandstärke und damit zu Ausschuss. Der Stützkern zeichnet sich jedoch durch eine Druckfestigkeit von 80 bar, insbesondere 100 bar und mehr aus. Er ist daher in der Lage, hohen Injektionsdrücken beim RTM-Verfahren ohne weiteres standzuhalten.

Durch die Verwendung von Sand kann die hohe Festigkeit des Stützkerns bereits mit einer geringen Menge organischem Bindemittel erreicht werden. So beträgt der Anteil des Bindemittels vorzugsweise weniger als 10 Gew.-%, insbesondere weniger als 5 Gew.-%, bezogen auf das Gewicht des Füllstoffs. Dies hat eine entsprechende Herabsetzung des Wassergehalts und damit eine kurze Trocknungszeit mit einer entsprechend kurzen Herstellungszeit des Stützkerns und somit kurze Zykluszeiten zur Folge. In Fällen, bei denen es auf die Trocknungszeit nicht entscheidend ankommt, beispielsweise bei der Prototypen-Fertigung, können jedoch auch höhere Bindemittelgehalte zur Anwendung kommen.

Vorzugsweise beträgt der Anteil des Bindemittels des Stützkerns jedoch mindestens 2 Gew.-%, bezogen auf das Gewicht des Füllstoffs, um eine hinreichende Festigkeit zu erreichen.

Als Sand wird vorzugsweise Quarzsand verwendet, jedoch sind auch andere Sände zur Herstellung des Stützkerns einsetzbar, beispielsweise Zirkonsand oder Cerabead.

Die mittlere Korngröße des Sandes liegt vorzugsweise zwischen 100 µm und 800 µm, insbesondere zwischen 200 µm und 500 µm.

Der Stützkern kann mit einer Kernschießmaschine, wie sie beispielsweise in DE 102 00 927 A1 beschrieben ist, in die Form mit Druckluft eingeschossen werden, weil der Sand die erforderliche Fließfähigkeit oder Fluidisierbarkeit des Formstoffs sicherstellt. Auch kann der Stützkern durch Pressen hergestellt werden, z.B. mit einem Formwerkzeug, bei dem der Formstoff mit einem Kolben in die Form gepresst wird.

Der Füllstoff kann vollständig aus Sand bestehen, jedoch ist als Füllstoff auch ein Gemisch einsetzbar, das aus Sand und Blähglasgranulat besteht. Blähglasgranulat ist ein Glas-Recyclingprodukt, das insbesondere zur Schall- und Wärmeisolierung eingesetzt wird. Zur Herstellung von Blähglasgranulat wird Altglas gemahlen, das dabei gebildete Glasmehl mit Wasser, Binde- und Blähmittel vermischt und daraus unter Aufschäumen des Blähmittels in einem Drehrohrofen bei etwa 900 °C das kugelförmige Granulat gebildet. Die mittlere Korngröße des Blähglasgranulats beträgt vorzugsweise 100 µm bis 800 µm, insbesondere 200 µm bis 500 µm. Durch die Verwendung von Blähglasgranulat kann die Trocknungszeit weiter reduziert werden.

Der Sand kann jedoch auch mit weiteren Füllstoffen vermischt werden, beispielsweise mit Hohlkugeln, wie Keramikhohlkugeln, z.B. mit einem mittleren Durchmesser von 50 m bis 400 µm. Auch sind Gemische aus Sand, Blähglasgranulat und Hohlkugeln als Füllstoff für den Stützkern einsetzbar.

Der Anteil des Sandes des Stützkerns beträgt jedoch mehr als 50 Gew.-% des Füllstoffs, vorzugsweise mehr als 70 Gew.-%, insbesondere 90 Gew.-% und mehr.

Als organisches Bindemittel wird ein Polysaccharid-Bindemittel verwendet. Das Polysaccharid-Bindemittel kann ein Bindemittel auf Cellulosebasis sein, insbesondere Carboxymethylcellulose. Vorzugsweise wird als Polysaccharid-Bindemittel jedoch ein Bindemittel auf Stärkebasis verwendet, insbesondere Stärkeether, da ein Bindemittel auf Stärkebasis bei gleichem Gewichtsanteil zu einer besonders hohen Festigkeit führt. Jedoch sind auch Gemische aus einem Bindemittel auf Cellulosebasis und einem Bindemittel auf Stärkebasis, also z.B. aus Carboxymethylcellulose und Stärkeether, einsetzbar.

Der Anteil des Bindemittels auf Stärkebasis beträgt vorzugsweise mehr als 70 Gew.-% des Bindemittels. Ein Bindemittel, das ganz, also zu mehr als 97 Gew.-% aus einem Bindemittel aus Stärkebasis, also insbesondere Stärkeether, besteht, wird jedoch im Allgemeinen bevorzugt.

Der Formstoff, aus dem der Stützkern gebildet wird, enthält neben dem Füllstoff und dem Bindemittel noch Wasser. Der Wasseranteil des Formstoffs, also des Gemischs aus Füllstoff, Bindemittel und Wasser, ist vom Bindemittelgehalt abhängig und beträgt vorzugsweise 2 bis 10 Gew.-%, insbesondere 3 bis 8 Gew.-%. Im Hinblick auf eine kurze Trocknungszeit des Stützkerns ist der Wassergehalt möglichst gering.

Das erfindungsgemäß bevorzugt verwendete Polysaccharid-Bindemittel zeichnet sich zudem durch eine geringe Hygroskopizität aus. Damit wird die Restfeuchte des Stützkerns durch Feuchtigkeit aus der Umgebung nicht erhöht. Die Restfeuchte des Stützkerns beträgt vorzugsweise 0,1 bis 0,8 Gew.-%. Bei einer Restfeuchte von über 0,8 Gew.-% nimmt die Festigkeit des Stützkerns ab, während er bei einer Restfeuchte von weniger als 0,1 Gew.-% spröde wird.

Durch die Erfindung wird eine schnelle Trocknung der Stützkerne sichergestellt. Zudem wird die Fließfähigkeit und Verarbeitbarkeit des Formstoffs deutlich verbessert, so dass die Stützkerne mit kurzen Taktzeiten beispielsweise mit einer Kernschießmaschine oder mit einer isostatischen Presse hergestellt werden können.

Das Tränken der Fasern auf dem Stützkern mit einem wärmehärtbaren Kunststoff, beispielsweise einem Expoxidharz, und das Aushärten des Kunststoffs erfolgt nach dem RTM-Verfahren oder nach dem Vakuum-Injektions-Verfahren . D.h., der mit den Verstärkungsfäden umwickelte, konfektionierte Stützkern wird zwischen die beiden Werkzeuge, also beispielsweise das Ober- und das Unterwerkzeug, einer beheizten Presse gelegt, worauf die Verstärkungsfasern auf dem Stützkern mit dem wärmehärtbaren Kunststoff imprägniert werden, der in den Hohlraum zwischen den beiden Werkzeugteilen injiziert wird, in dem der Stützkern angeordnet ist. Dabei kann erfindungsgemäß bei dem RTM-Verfahren der wärmehärtbare Kunststoff unter einem Druck von 50 bar, insbesondere mehr als 80 bar oder gar 100 bar und mehr, in den Hohlraum gepresst werden, während beim Vakuum-Injektions-Verfahren der wärmehärtbare Kunststoff in den Hohlraum mit dem darin angeordneten konfektionierten Stützkern gesaugt wird. Nach dem Aushärten des Harzes wird entformt und der Stützkern mit Wasser ausgeschwemmt, so dass das faserverstärkte Strukturhohlbauteil gebildet wird.

Nach dem erfindungsgemäßen Verfahren können beliebige Strukturhohlbauteile aus faserverstärktem Kunststoff hergestellt werden. Im Automobilbereich sind vor allem Karosseriebauteile herstellbar, insbesondere die Stützsäulen, also die A-, Bund C-Säule, Schweller und Stoßfänger.

### Beispiel 1

Es wird ein Formstoff aus Quarzsand (mittlere Korngröße 320 µm) und einer wässerigen Stärkeether(SE)-Lösung hergestellt.

Die Formstoffzusammensetzung beträgt:

| | |
|---|---|
| Füllstoffgehalt: | 90,9 Gew.-% |
| Bindemittelgehalt (SE): | 3,6 Gew.-% |
| Wassergehalt: | 5,5 Gew.-% |

### Vergleichsbeispiel 1

Es wird ein Formstoff mit dem gleichen Sand wie in Beispiel 1 und einer wässerigen Polyvinylpyrrolidon(PVP)-Lösung hergestellt.

Die Formstoffzusammensetzung beträgt:

| | |
|---|---|
| Füllstoffgehalt: | 88,8 Gew.-% |
| Bindemittelgehalt (PVP): | 3,2 Gew.-% |
| Wassergehalt: | 8 Gew.-% |

### Vergleichsbeispiel 2

Es wird ein Formstoff aus Keramikhohlkugeln (mittlerer Durchmesser 0,14 mm) und einer wässerigen PVP-Lösung hergestellt.

Die Formstoffzusammensetzung beträgt:

| | |
|---|---|
| Füllstoffgehalt: | 70,5 Gew.-% |
| Bindemittelgehalt (PVP): | 8,5 Gew.-% |
| Wassergehalt: | 21 Gew.-% |

### Vergleichsbeispiel 3

Es wird ein Formstoff aus den gleichen Keramikhohlkugeln wie im Vergleichsbeispiel 2 und einer Carboxymethylcellulose(CMS)/Stärkeether(SE)-Lösung hergestellt.

Die Bindemittelzusammensetzung beträgt:

Volumenverhältnis CMC-Lösung/SE-Lösung = 40/60

| | |
|---|---|
| CMC-Lösung: | ca. 15 Gew.-% in Wasser |
| SE-Lösung: | ca. 35 Gew.-% in Wasser |

Die Formstoffzusammensetzung beträgt:

| | |
|---|---|
| Füllstoffgehalt: | 87,5 Gew.-% |
| Bindemittelgehalt (CMC/SE): | 5 Gew.-% |
| Wassergehalt: | 7,5 Gew.-% |

### Vergleichsbeispiel 4

Es wird ein Formstoff aus dem gleichen Sand wie in Beispiel 1 und einer wässerigen Natriumpolyphosphat-Lösung hergestellt.

Die Formstoffzusammensetzung beträgt:

| | |
|---|---|
| Füllstoffgehalt: | 96 Gew.-% |
| Bindemittelgehalt: | 2,5 Gew.-% |
| Wassergehalt: | 1,5 Gew.-% |

Aus dem Formstoff nach dem Beispiel 1 und den Vergleichsbeispielen 1 bis 4 wurde jeweils ein Biegeriegel (22 x 22 x 170 mm) hergestellt, um mit einer 3-Punkt-Biegeprüfmaschine die Biegefestigkeit zu bestimmen. Dabei wird der Biegeriegel zwischen zwei Auflagern mittels eines beweglichen Stempels in der Mitte gebrochen und die für den Bruch aufzuwendende Kraft gemessen.

Die Biegeriegel wurden unter gleichen Bedingungen auf einer Kernschießmaschine hergestellt. Der Schießdruck wurde auf 5 bar festgelegt. Die anschließende Trocknungszeit der Biegeriegel im beheizten Werkzeug betrug bei 150 °C jeweils zunächst 10 min. Nach dem Entformen wurde zur Sicherstellung einer vollständigen Trocknung für 30 min in einem bei 130 °C beheizten Konvektionsofen nachgetrocknet. Die Biegeprüfung wurde durchgeführt, nachdem die Biegeriegel ca. 60 min bei 22 °C und einer Umgebungsluftfeuchte zwischen 40 und 55 % relative Feuchte auskühlten. Die Ergebnisse sind in der nachstehenden Tabelle wiedergegeben.

**Tabelle**

| | Biegefestigkeit (N/cm²) |
|---|---|
| Beispiel 1 | 630 |
| Vergleichsbeispiel 1 | 440 |
| Vergleichsbeispiel 2 | 500 |
| Vergleichsbeispiel 3 | 290 |
| Vergleichsbeispiel 4 | 280 |

Aus dem Formstoff nach dem Beispiel 1 wurde ein weiterer Prüfkörper in gleicher Weise wie der Biegeriegel hergestellt. Der Prüfkörper wurde in einem Hochdruck-Autoklaven einem Druck von 200 bar unterworfen. Die anschließende Messung der Länge des Prüfkörpers mit einer Schiebelehre ergab keine messbare Längenänderung gegenüber der Länge des Prüfkörpers vor der Behandlung in dem Hochdruck-Autoklaven.

## Patentansprüche

1. Verfahren zur Herstellung eines Strukturhohlbauteils aus faserverstärktem Kunststoff mit einem wasserdispergierbaren Stützkern, wobei der Stützkern aus einem Formstoff aus einem wasserlöslichen Bindemittel, einem Füllstoff und Wasser mit einem Formwerkzeug geformt, getrocknet und dann mit Verstärkungsfasern versehen wird, worauf die Fasern auf dem Stützkern nach dem Resin Transfer Molding (RTM)- oder mit dem Vakuum-Injektions-Verfahren mit einem aushärtbaren Kunststoff getränkt, der Kunststoff ausgehärtet und der Stützkern mit Wasser ausgeschwemmt wird, **dadurch gekennzeichnet, dass** für den Formstoff, aus dem der Stützkern geformt wird, als Füllstoff mehr als 50 Gew.-% Sand und als Bindemittel ein Polysaccharid-Bindemittel verwendet wird.

2. Verfahren nach Anspruch 1, **dadurch gekennzeichnet, dass** das RTM-Verfahren mit einem Injektionsdruck von mehr als 80 bar durchgeführt wird.

3. Verfahren nach Anspruch 1 oder 2, **dadurch gekennzeichnet, dass** der Sand eine mittlere Korngröße von 100 bis 800 µm aufweist.

4. Verfahren nach einem der Ansprüche 1 bzw. 3, **dadurch gekennzeichnet, dass** der Füllstoff zusätzlich Blähglasgranulat und/oder Hohlkugeln enthält.

5. Verfahren nach einem der vorstehenden Ansprüche, **dadurch gekennzeichnet, dass** der Anteil des Bindemittels in dem Stützkern 2 bis 10 Gew.-%, bezogen auf das Gewicht des Füllstoffs, beträgt.

6. Verfahren nach Anspruch 5, **dadurch gekennzeichnet, dass** der Anteil des Bindemittels in dem Stützkern höchstens 5 Gew.-%, bezogen auf das Gewicht des Füllstoffs, beträgt.

7. Verfahren nach Anspruch 1, **dadurch gekennzeichnet, dass** das Polysaccharid-Bindemittel ein Bindemittel auf Stärkebasis ist.

8. Verfahren nach Anspruch 7, **dadurch gekennzeichnet, dass** der Anteil des Bindemittels auf Stärkebasis wenigstens 70 Gew.-% des Polysaccharid-Bindemittels beträgt.

9. Verfahren nach Anspruch 7 oder 8, **dadurch gekennzeichnet, dass** das Bindemittel auf Stärkebasis Stärkeether ist.

10. Verfahren nach einem der vorstehenden Ansprüche, **dadurch gekennzeichnet, dass** der Stützkern nach dem Trocknen eine Restfeuchte von 0,1 bis 0,8 Gew.-% aufweist.

## Claims

1. A method for producing a hollow structural component from fibre-reinforced plastics material with a water-dispersible support core, the support core being formed from a moulding material made of a watersoluble binding agent, a filler and water using a moulding tool, dried and then provided with reinforcement fibres, whereupon the fibres on the support core, by means of the resin transfer moulding method (RTM) or the vacuum injection method, are saturated with a curable plastics material, the plastics material is cured and the support core is flushed with water, **characterised in that**, for the moulding material, from which the support core is formed, more than 50 % by weight of sand is used as the filler and a polysaccharide binding agent is used as the binding agent.

2. A method according to claim 1, **characterised in that** the RTM method is carried out at an injection pressure of more than 80 bar.

3. A method according to claim 1 or claim 2, **characterised in that** the sand has a mean grain size of 100 to 800 µm.

4. A method according to any one of claims 1 to 3, **characterised in that** the filler additionally contains blown glass granulate and/or hollow balls.

5. A method according to any one of the preceding claims, **characterised in that** the proportion of the binding agent in the support core is 2 to 10 % by weight based on the weight of the filler.

6. A method according to claim 5, **characterised in that** the proportion of the binder in the support core is at most 5 % by weight based on the weight of the filler.

7. A method according to claim 1, **characterised in that** the polysaccharide binding agent is a binding agent based on starch.

8. A method according to claim 7, **characterised in that** the proportion of the binding agent based on starch is at least 70 % by weight of the polysaccharide binding agent.

9. A method according to claim 7 or claim 8, **characterised in that** the binding agent based on starch is starch ether.

10. A method according to any one of the preceding claims, **characterised in that** the support core, after drying, has a residual moisture of 0.1 to 0.8 % by weight.

## Revendications

1. Procédé de fabrication d'une pièce à structure creuse en matière plastique renforcée par des fibres à l'aide d'un noyau de moule dispersible dans l'eau, le noyau de moule étant moulé en une matière de moulage composée d'un liant soluble dans l'eau, d'une charge et de l'eau à l'aide d'un moule, puis séché et ensuite muni de fibres de renforcement, puis, on imprègne les fibres du noyau de moule selon le procédé de moulage par injection sous pression (procédé d'injection RTM) ou par un procédé d'injection sous vide pour l'imprégner d'une matière plastique durcissable, on laisse durcir la matière plastique et on évacue le noyau de moule en le rinçant avec de l'eau,
**caractérisé en ce que**
pour la matière de moulage avec laquelle on moule le noyau de moulage, on utilise comme charge plus de 50 % en poids de sable et comme liant, un liant de polysaccharide.

2. Procédé selon la revendication 1,
**caractérisé en ce qu'**
on exécute le procédé d'injection RTM avec une pression d'injection supérieure à 80 bars.

3. Procédé selon la revendication 1 ou 2,
**caractérisé en ce que**
le sable a une granulométrie moyenne comprise entre 100 µm et 800 µm.

4. Procédé selon les revendications 1 à 3,
**caractérisé en ce que**
la charge contient en plus un granulé de verre soufflé et/ou de billes creuses.

5. Procédé selon les revendications précédentes,
**caractérisé en ce que**
la teneur en liant dans le noyau de moulage correspond de 2 % à 10 % en poids, rapportés au poids de la charge.

6. Procédé selon la revendication 5,
**caractérisé en ce que**
la teneur en liant dans le noyau d'appui est au maximum de 5 % en poids rapportés au poids de la matière de remplissage.

7. Procédé selon la revendication 1,
**caractérisé en ce que**
le liant à base de polysaccharide est un liant à base d'amidon.

8. Procédé selon la revendication 7,
**caractérisé en ce que**
la teneur en liant à base d'amidon représente au moins 70 % en poids du liant à base de polysaccharide.

9. Procédé selon la revendication 7 ou 8,
**caractérisé en ce que**
le liant à base d'amidon est de l'éther d'amidon.

10. Procédé selon les revendications précédentes,
**caractérisé en ce que**
le noyau d'appui présente, après séchage, une humidité résiduelle de 0,1 % à 0,8 % en poids.
